# EUROPEAN PATENT SPECIFICATION

(11) **EP 4 291 474 B1**
(45) Date of publication and mention of the grant of the patent: **29.07.2026**
(21) Application number: 22708221.1
(22) Date of filing: 10.02.2022
(51) Int. Cl.: B62K 19/10, B62K 3/04, B62J 43/13, B62J 43/28

(54) **BICYCLE FRAME AND METHOD OF MAKING A BICYCLE FRAME**
FAHRRADRAHMEN UND VERFAHREN ZUR HERSTELLUNG EINES FAHRRADRAHMENS
CADRE DE BICYCLETTE ET PROCÉDÉ DE FABRICATION D'UN CADRE DE BICYCLETTE

(30) Priority: 10.02.2021 BE 202105099
(43) Date of publication of application: 20.12.2023
(73) Proprietor: Aska Bike, 3061 Leefdaal (BE)
(72) Inventor: DEHING, Filip, 3061 Leefdaal (BE)
(74) Representative: Winger
(86) International application number: PCT/IB2022/051206
(87) International publication number: WO 2022/172195

(56) References cited:
- WO-A2-2017/077397
- DE-U1- 202010 010 521
- FR-A- 623 199
- JP-A- 2011 230 610
- KR-A- 20160 050 583
- US-A- 4 613 146
- US-A1- 2017 297 647

## Description

### Scope of the invention

This invention is generally related to bicycles. More specifically, it relates to bicycle frames and methods to construct bicycle frames.

### Background of the invention

Today the basis of an aluminum bicycle frame is mainly aluminum tubes. These types of bicycle frames are nearly all built in specialized factories with high production capacity for the specific heat-treatment (annealing, shocking, aging). This approach has been developed over 20 to 30 years with the objective of producing large numbers of normal (not electric) bikes, or for e-bikes with limited capacity (250 W) that are actually just normal bikes with a motor and battery built on (not integrated). The cost price and the low weight are the primary drivers. There have been specifically extruded tube profiles used to accommodate a battery.

This manner of production, paired with the specific heat treatment and the limited number of factories equipped to perform these heat treatments lead to longer delivery times. The development and start of production of a new bike frame takes at least 8 months. There is also too little space for innovation, seeing that new concepts are difficult to integrate into these types of specialized factories.

Thus there is space for a new type of bicycle frame and a new method of creating a bicycle frame with a less complex thermal treatment.

Document WO2017/077397 A2 discloses the preamble of claim 1. Document DE202010010521 U1 shows a bicycle frame very similar to the claimed frame, but the bearing structure is a tube section that is open at the bottom side and is not constructed of folded metal plates.

### Summary of the invention

The objective of the embodiments of the current invention is to create a bicycle frame and a method to produce it.

It is an advantage of the embodiments according to the current invention that to create this type of bicycle frame, a less complex thermal treatment is necessary than the thermal treatment necessary to produce traditional bicycle frames (annealing, quenching, aging).

The aforementioned objective is realized by a bicycle frame and/or method according to the current invention. The invention is defined by independent claims 1 and 14.

In a first aspect, the current invention comprises a bicycle frame with a basis made of components including an under column with head tube, a seat post and a structure for a bottom bracket. The under column and the structure for the bottom bracket are made of metal plates whereby at least some plates are crimped, and whereby at least some of the plates overlap with each other and are connected to each other. They may be welded or glued to each other.

The structure for the bottom bracket is the bearing structure for the under column and the seat post. The bearing structure, the bottom column and the seat post form a solid whole. The bearing structure is adapted to mount a bottom bracket or a gearbox.

According to the invention, the bearing structure is made of metal plates that extend from the bottom column to the seat post.

In not claimed examples, the bearing structure is attached to the under column at various points, creating a total fixation length of at least 10 cm.

In not claimed examples, the attachment point is between the bearing structure and the under column is that which is furthest away from a location of the seat post, at least 10 cm away from that location.

In not claimed examples, the attachment point between the bearing structure and the under column is that which is furthest away from that location of the bottom bracket, at least 10 cm away from that location.

In embodiments of the current invention, the bicycle frame has swingarm. The swingarm is made of metal plates overlapping with each other and connected to each other. They may be welded or glued to each other. The swingarm is attached to the bearing structure.

In the embodiment of the current invention, the parts are aligned toward with other using a crenelated connection.

In embodiments of the current invention, the metal plates are made of aluminum alloy. This alloy could contain zinc, for example.

In not claimed examples, a location where the components are connected (such as welded or glued) are at least 10 mm away from the location where the expected maximum load is.

In embodiments of the current invention, at least one of the components are made of folded metal, or of one folded metal plate and is shaped so that one or more batteries can be installed inside.

In a second aspect, the current invention is a bicycle. The bicycle comprises a bicycle frame according to the first aspect. The bicycle may include batteries integrated into one or more components of the bicycle frame. In addition, the bicycle may have a motor and a controller for adjusting the power of the bike.

In a third aspect, the current invention involves a method for creating a bicycle frame according to the first aspect consisting of components made of metal plates. The method comprises:
- cutting out metal plates from a base plate and folding the cut metal plates, whereby the cut out metal plates allow for creating the bearing structure of the bicycle frame,
- fitting the cut metal plates to form the under column and bearing structure such that the plates of the bearing structure form a closed tube section,
- welding or gluing the metal plates together such that the closed tube section extends from the bottom column to a seat post wherein torsional stiffness is obtained by the closed tube section of the bearing structure.

In embodiments of the current invention, when cutting and folding the components, crenelated connections are added to the components. When fitting the components together, they may be positioned opposite each other using crenelated connections.

Specific and preferred aspects of the invention are included in the attached independent and dependent claims.
These and other aspects of the invention will be clear from and explained with reference to the following described embodiment(s).

### Summary description of the figures

FIG. 1 shows a technical drawing of a bicycle frame consistent with the embodiments of the current invention.
FIG. 2 shows an exploded view drawing of the bicycle frame in FIG. 1, consistent with the embodiments of the current invention.
FIG. 3 shows a technical drawing of an embodiment consistent with the embodiments of the current invention, where the characteristic distances and a characteristic length are shown.
FIG. 4 shows a technical drawing of a bearing structure consistent with the embodiments of the current invention.
FIG. 5 shows a technical drawing of a swingarm consistent with the embodiments of the current invention.
FIG. 6 shows an exploded view drawing of the swingarm in FIG. 5, consistent with the embodiments of the current invention.
FIG. 7 shows a technical drawing of a support structure consistent with the embodiments of the current invention, where the location for a weld and expected location of maximal load are indicated.
FIG. 8 shows a technical drawing of a bicycle frame with an installed bottom bracket consistent with the embodiments of the current invention.
FIG. 9 shows a technical drawing of a bicycle consistent with the embodiments of the current invention.
FIG. 10 shows a technical drawing of a method with the embodiments of the current invention.

The figures are only schematic and non-limiting. In the drawings, the dimensions of components suggested and not drawn to scale for illustrative purposes.

Reference numbers in the claims may not be interpreted to limit the scope of protection. The same reference numbers refer to the same or equivalent elements in the various figures.

### Detailed description of illustrative embodiments

The current invention will be described with regard to certain embodiments and with reference to certain drawings, but the invention is not limited to these and is only limited by the claims. The drawings described are only schematic and non-limiting. In the drawings, for illustrative purposes, the dimensions of some elements are enlarged and not drawn to scale. The dimensions and the relative dimensions are sometimes not consistent with the actual practical designs of the invention.

In addition, the terms first, second, third and the like in the description and in the claims are used to differentiate equivalent elements and not necessary for the description of a sequence, space or hierarchy or in any other way. It must be understood that the terms used in this manner under certain conditions may be interchanged and that the embodiments of the invention described here are suitable to work in another sequence than that described here.

In addition, the terms, "top", "bottom", "above", "for" and the like in the description and in the claims are used for descriptive purposes and not necessarily to indicate relative positions. It must be understood that the terms used in this manner under certain conditions may be interchanged and that the embodiments of the invention described here are suitable to work in another orientation than that described or shown here.

It must be noted that the term "comprises", as used in the claims must not be interpreted as limited to the following elements described; this term does not exclude any other elements or steps. The term should be interpreted as specifying for the presence of the named features, elements, steps or components referral to, but does not rule out the presence addition of one or more other features, elements, steps or components of groups thereof. Thus, the range of the expression "a device comprising elements A and B" is not limited to these have to be to devices that only consist of components A and B. This means that with regard to the current invention, A and B are the only relevant components of the device.

Reference to this specification to "one embodiment" or "an embodiment" means that a specific feature, structure or characteristic described in association with the embodiment is included in at least one embodiment of the current invention. Thus, the occurrence of the expression "in one embodiment" or "in an embodiment" in various places throughout this specification may not necessarily refer to the same embodiment, but may do. Furthermore, the specific features, structures or characteristics can be combined in any other suitable manner, which would be clear to an average professional based on this notification, in one or more embodiments.

Comparably, it must be appreciated that in the description of the previous embodiments of the invention, various features of the invention that can sometimes be grouped into a single embodiment, figure or description of it with the goal of streamlining the publication and helping in understanding one or more of the various inventive aspects. This method of publication must never be interpreted as a reflection of an intention that the invention requires more features than explicitly named in every claim. Rather, as reflected in the following claims, inventive aspects lie in less than all features of a single prior published embodiment. Thus, the claims following the detailed description are hereby explicitly included in this detailed description, with every individual claim as a different embodiment of this invention.

In the description provided here, numerous specific details are brought to light. It is also to be understood that embodiments of the invention can be made without these specific details. In other cases, well-known methods, structures and techniques are not provided in detail to keep this description clear.

In a first aspect, the current invention is a bicycle frame 100. The bicycle frame has a basis that comprises the following components: a bottom column 110 with head tube 130, a seat post 140 and a structure 120 for a bottom bracket.

The bottom column 110 and the structure 120 for the bottom bracket are made of metal plates. At least some of these plates are folded, and at least some of these plates overlap and are connected to each other (such as welded or glued).

The structure 120 for the bottom bracket is the bearing structure for the bottom column 110 and the seat post 140. The bearing structure 120, the bottom column 110 and the seat post 140 form a solid whole. The bearing structure 120 is adapted to mount a bottom bracket.

It is an advantage of embodiments of the current invention that the components that form the bearing structure of the bicycle frame are made of folded plates. The plates for the components can be made by laser-cutting from a base plate and folding them.

By using components made of folded plates and by overlapping the plates, the location where the parts are welded or glued together are shifted compared to classic plates. The welds can be removed from the most loaded zones.

In embodiments of the current invention, this is achieved by providing a structure in which a bottom bracket can be mounted and that is a bearing structure for the bottom column and the seat post. The bearing structure, the bottom column and the seat post form a solid whole. The bottom column and the bearing structure are made of metal plates. If the bottom column is made of metal plates, we refer in the current invention to a bottom column instead of to an under pipe.

By using metal plates for forming the bottom column and the bearing structure, there is no need for expensive calibers and high volumes. Thus quality frames can be produced in a cost-efficient manner at companies who are not necessarily specialized in bicycle frames.

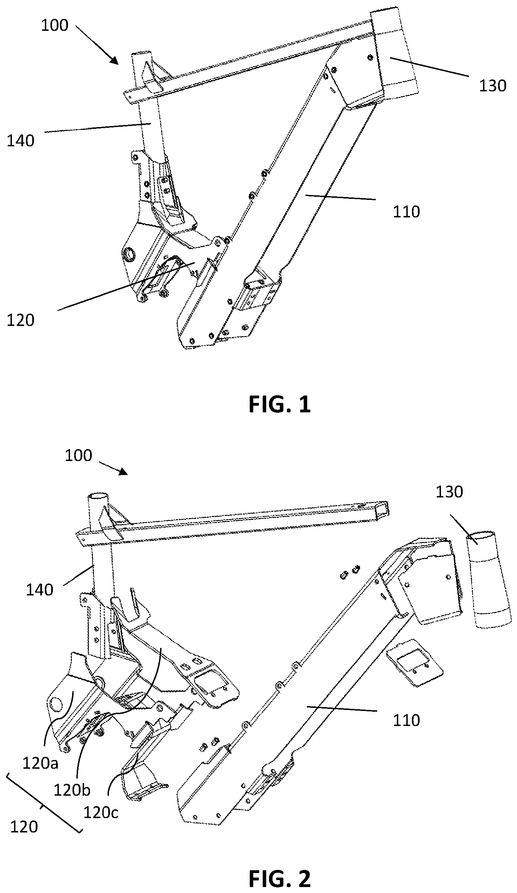

FIG. 1 shows a technical drawing of an example design of a bicycle frame 100 consistent with the current invention. This figure shows the bottom column 110 with head tube 130, the bearing structure 120 and the seat post 130. In the bearing structure there is space provided for the mounting of a bottom bracket.

In embodiments of the current invention, the bearing structure 120 is made of metal plates that extend from the bottom column 110 to the seat post 140.

This is the case, for example for the bicycle frame illustrated in FIG. 1. The same frame is shown in FIG. 2, but as an exploded drawing of it. The parts 120a, 120b and 120c of the bearing structure 120 are folded metal plates. Certain components of the bearing structure, in this case components 120a, 120b extend out from the bottom column 110 to the seat post 140.

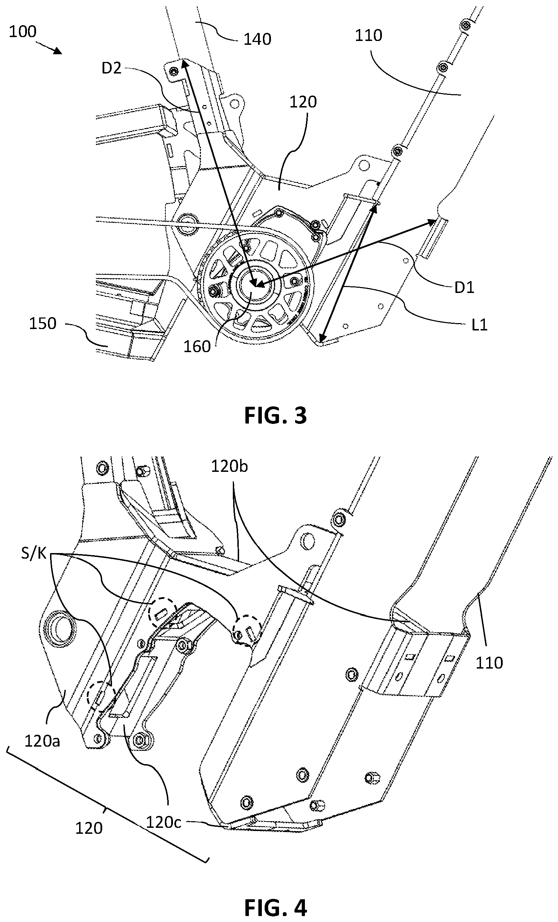

In embodiments of the current invention, the bearing structure 120 is fixed to the bottom column 110 at various point. The total fixation length may be, for example, at least 10 cm per side, or even more than 20 cm, or even more than 35 cm per side. Typically, this fixation is a glue or welded connection. Typically, the weld or glue connection is symmetrical, but not always or totally symmetrical. In the example of FIG. 2 and FIG. 3, this length is determined by the ends of the support structure at the edge of the bottom column 110. These are formed by components 120 b and 120c. The total fixation length is shown in FIG. 3 as L1.

However, the invention is not limited to the example illustrated in FIG. 3. The supporting structure may also clamp around the bottom column 110, or the reverse, the bottom column 110 parts may clamp around the bearing structure 120. In that case, the length is measured over the entire area of the clamp(s).

In embodiments of the current invention, the bottom column and/or the seat post may be clamped between plates of the bearing structure.

In embodiments of the current invention, the attachment point is between the bearing structure 120 and the bottom column 110 is that which is furthest away from the location of the bottom bracket, at least 10 cm away from that location, or even 20 cm or even 40 cm. The bottom bracket 160 refers to the central drive shaft of a chain or drive belt to the back wheel. This may be, for example, the central axle of a gearbox. An example of a gearbox 160 mounted in the bearing structure 120 is illustrated in FIG. 3. The distance between the bottom bracket and the fixation point between the bearing structure 120 and the bottom column 110 that is furthest away from the location of the bottom bracket, indicated in this figure by D1.

In embodiments of the current invention, the attachment point is between the bearing structure 120 and the bottom column 140 that is furthest away from the location of the bottom bracket, at least 10 cm away from that location, or even 20 cm or even 30 cm. This distance is indicated in FIG. 3 as D2.

Through the bearing structure, the tension in the metal plates and the tension in the welded or glued connections is distributed over the length of the connection with the bottom column and over the length of the connection with the seat post.

Various functions can be combined in a metal plate. In some embodiments of the current invention, the bearing structure 120 has attachment points and/or space for the attachment of one or more of the following components: a gearbox, cables and plug connections, brake lines, electronic components, attachment brackets. In embodiments of the current invention, this bearing structure is built of laser-cut/folded plates.

FIG. 4 shows a detail of the bearing structure 120 and the bottom column 110. Both components are made of folded metal plates. Part 120b has a dual function, it also serves as a cross-pate to reinforce the tube of the bottom column.

In embodiments of the current invention, the parts are aligned toward with other using a crenelated connection. An example of this is shown in FIG. 3 with the dotted circles S/K. The crenelated connection allows in this case for the metal plates 120c (on which a crenel is attached in various locations) and 120a (in which at various places a slot is provided) to outline them opposite each other.

In embodiments of the current invention, a number of plates are necessary to make the bottom column, the bearing construction for the bottom bracket and the swingarm. It is an advantage of embodiments of the current invention that the complexity of the plates, whereby various pieces must be positioned opposite each other, is mitigated by use of crenelated connections.

It is an advantage of embodiments of the current invention that none or a minimum number of calibers are necessary to align the components with regard to each other.

In embodiments of the current invention, the bicycle frame has swingarm 150. The swingarm 150 is made of metal plates that overlap and are connected to each other (e.g. welded or glued), and which attach to the swingarm to the bearing structure 120. In embodiments of the current invention, the bearing structure is built of lasercut/folded plates. The plate work of this bearing base preferably forms a tube section where possible. The advantage of this is that it allows for optimization of the general and torsional stiffness. The swingarm 150 can be independently spring loaded or not.

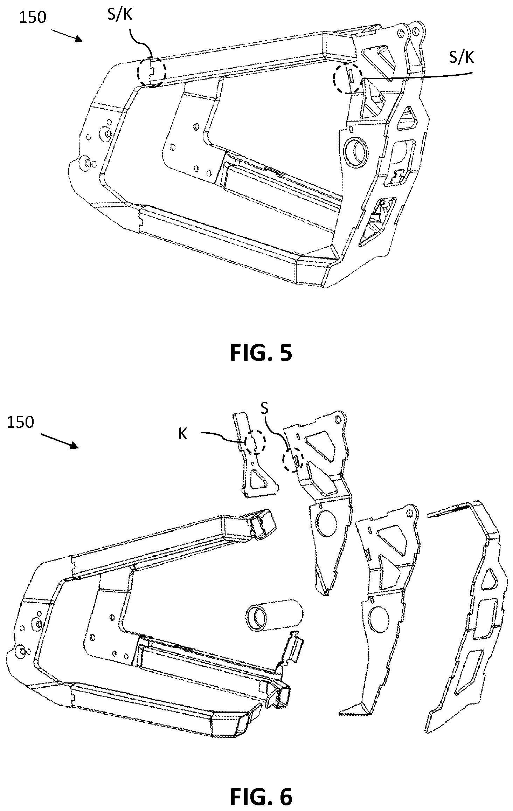

An example of a swingarm is shown in FIG. 5 and FIG. 6. The drawing in FIG. 6 is an exploded drawing of the same swingarm as that in FIG. 5. The metal plates for the swingarm are lined up to each other using crenelated connections S/K. In embodiments of the current invention, the swingarm 150 is attached to the bearing structure 120.

In embodiments of the current invention, the metal plates are made of aluminum alloy. This aluminum alloy may contain zinc. The aluminum alloy may be an aluminum 7020 alloy. It is thereby an advantage that the loss of strength while welding is limited with regard to the strength loss when welding aluminum alloy of the 6000 series and that the aging process is not an essential step and can be designed with a less specific infrastructure.

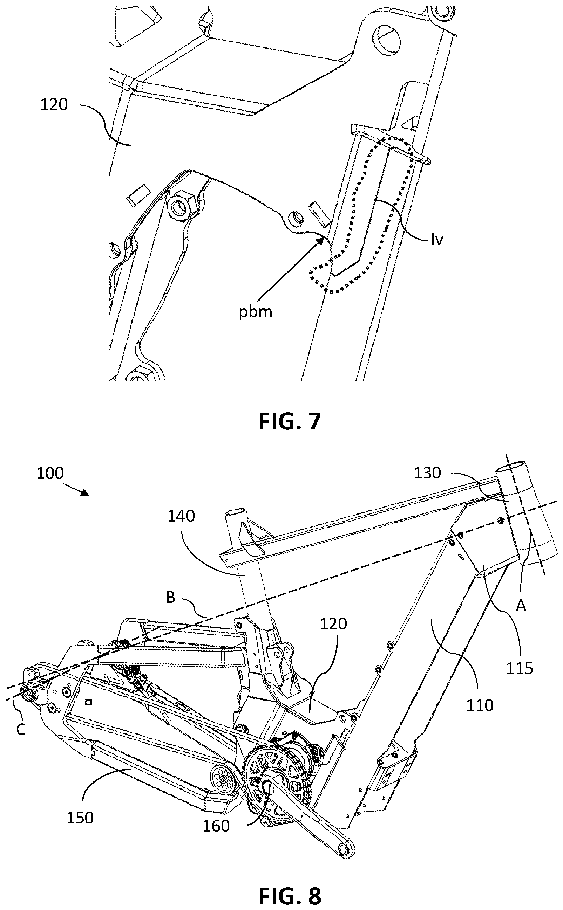

In embodiments of the current invention, points where the components are welded or glued to each other are at least 10 mm away from the location where the expected maximum load is. An example of this is shown in FIG. 7. A weld connection (Iv) is shown in this figure. This is the line circled by the dotted line. This is also the place (pbm) where the maximal load maximum is indicated. Both places are, in embodiments of the current invention, at least 10 mm from each other. This is possible because by working with metal plates one can form a bearing structure 120 which is different with regard to a bicycle frame where the bearing structure is made of tubes.

In embodiments of the current invention is at least one of the components is formed such that one or more batteries can be mounted.

In a specific aspect, the current invention is a bicycle frame that has a component made of one or more metal plates and formed such that one or more batteries can be mounted. The bicycle frame may also have additional components, consistent with the current invention, and as described in this description.

In a bicycle frame according to the embodiments of the current invention the component which holds the battery may be placed on the bottom column. This is made of lasered/folded plate. The bottom column may be equipped with an extra-long opening for the mounting of the battery and may be equipped with mounting brackets. At the ends of this overly long opening, cross partitions are mounted to guarantee shape tolerance in these zones without needing calibers, as well as additional torsional rigidity. This is the case, for example for the bicycle frame illustrated in FIG. 1.

Where possible, the platework is shaped into a tube profile to optimize the torsional rigidity. This is more specifically the case for the connection between the bottom column and the head tube, and for the bearing structure in which the bottom bracket can be mounted.

In some embodiments of the current invention, classical tubes are used, where necessary or desired for interfacing with current bicycle parts. Examples of this are the head tube 130 that is adjusted to support the bearing of the steering column, the seat post 140 into which the saddle pin can be pushed and secured.

FIG. 8 shows a technical drawing of a bicycle frame 100 consistent with the embodiments of the current invention whereby a bottom bracket 160 is mounted in the bearing structure 120.

In a bicycle frame, it is important to achieve good torsional rigidity of the frame. It is important that it is also described in the standardization what each bicycle must meet (EN4210-6 art 4.3 Frame-fatigue test with pedaling forces). The torsion of the entire frame is illustrated in FIG. 8. Concretely, it is about the rigidity of the torsion axis B of the entire frame between the steering axle A and the rear wheel axle C. This is based on the torsional rigidity between the steering axle A and the rear wheel axle C.

In a bicycle frame, this torsional rigidity is determined by various parts of the frame linked together, which form a series of different elements that each contribute to the torsional rigidity:
1. - The connection 115 of the head tube 130 to the bottom column 110; in this example this is a closed tube 115 formed by metal plates;
2. - The bottom column 110; in this example this is a U-shaped folded plate;
3. - The bearing structure 120 between the bottom column 110 and the swingarm 150; in embodiments of the current invention this bearing structure forms the connection between the bottom column 110 and the "pivot point", whereby the "pivot point" is the rotating connection between the plates 120 and the swingarm.
4. - The swingarm 150.

In embodiments of the current invention, the connection 115 between the head tube 130 and the bottom column 110 is a closed tube to increase the torsional rigidity of the bicycle frame.

In embodiments of the current invention, the bottom column is not necessarily a closed tube but may be an open tube, namely a U-shaped metal plate between the connection 115 and the bearing structure 120. This allows for the installation of batteries. The opening of the U-shaped tube may, for example, on the underside of it if the bicycle is upright.

In embodiments of the current invention, the metal plates of the structure for the bottom bracket form a closed tube. This closed tube 120 extends, for example, from the bottom column 110 to the seat post 140 and/or the swingarm 150. It may be formed of side plates 120a, top plate 120b and bottom plate 120c (above and below refers here to the position of the plates when the bicycle is upright). It is an advantage of the embodiments of the current invention that the torsional rigidity is created in a unique manner, namely by metal plates forming a closed tube. This closed tube may have a rectangular cross-section. The size of the cross-section may vary depending on the position of the cross-section. Because the structure for the bottom bracket forms a closed tube, which is particularly suitable to result in increased resistance to torsion compared to an open tube, embodiments of the current invention need no additional internal fixations. Additional reinforcement against torsion can also be achieved by attaching a closed tube as a connection between the head tube and the bottom tube.

It is an advantage of embodiments of the current invention that the plates of the bearing structure 120, the bottom column 110 and the swingarm 150 form a whole without needing an additional internal structure. It is, for example, not necessary to reinforce the bottom column with an additional internal structure. This allows for space in the bottom column for batteries.

In embodiments of the current invention, the top plate 120b also serves as the cross-plate of the bottom column.

In embodiments of the current invention, the top plate 120c also serves as the cross-plate of the bottom column.

In embodiments of the current invention, the top plate 120c also serves as the cross-plate of the bottom column.

In embodiments of the current invention, plates of the structure 120 for the bottom bracket are embedded in the bottom column 110 (they run through to the bottom column) and are welded or glued to the bottom column at locations where the expected load is not maximal.

In embodiments of the current invention, the plates of the structure 120 run through to the neighboring elements (the bottom column 110 and the seat post 140) in such a way that no welding or gluing is necessary in the zones specifically sensitive to high strain. In this way, the highest material strain is removed from the connection zones (which are typically weaker, such as through heat from welding).

In embodiments of the current invention, the bottom column has a U-shaped metal plate. This may, for example, extend from the head tube to the structure 120 of the bottom bracket.

It is an advantage that the U-shaped metal plate in itself has the necessary strength and rigidity without requiring additional reinforcing or stiffening elements internally in the bottom column. There is also space for installing a battery in the bottom column 110.

In embodiments of the current invention, the plate work is made so that the plate work, with a minimum number of different plates, also assumes functions for the attachment of all types of parts specific to electric bikes, such as attachment of the swingarm 150, the damper between the swingarm 150 and the structure 120, a battery plug, a power controller, etc.

In embodiments of the current invention a plate 120b serves as a cross-plate of the plates of the bearing structure of the bottom column and forms the top side of the torsion tube. In embodiments of the current invention this plate is also the support plate for the bottom side of the battery that is installed in the bottom column.

In this embodiment the bottom part 120c serving as the bottom of the torsion tube is also the end plate of the bottom column 110.

In embodiments of the current invention, the design of the plates is such that the production of the frames can be done efficiently without or with a minimum of specific tooling. In embodiments of the current invention the plates of the structure 120 of the bottom bracket and the plates of the swingarm 150 are designed (see left on FIG. 5), so that these 2 parts of the frame are part of the structurally most complex and heaviest loaded zones of the frame, but can be assembled and welded without tooling. In the classical way of building frames, there is extensive use of tooling to correctly assembly all of the parts of the frame and to secure them during welding; this tooling and the cost of this tooling result in a high cost and thus little flexibility in the production process. It is an advantage of embodiments of the current invention that by using the crenelated connections there is no extra tooling necessary to position the plates against each other.

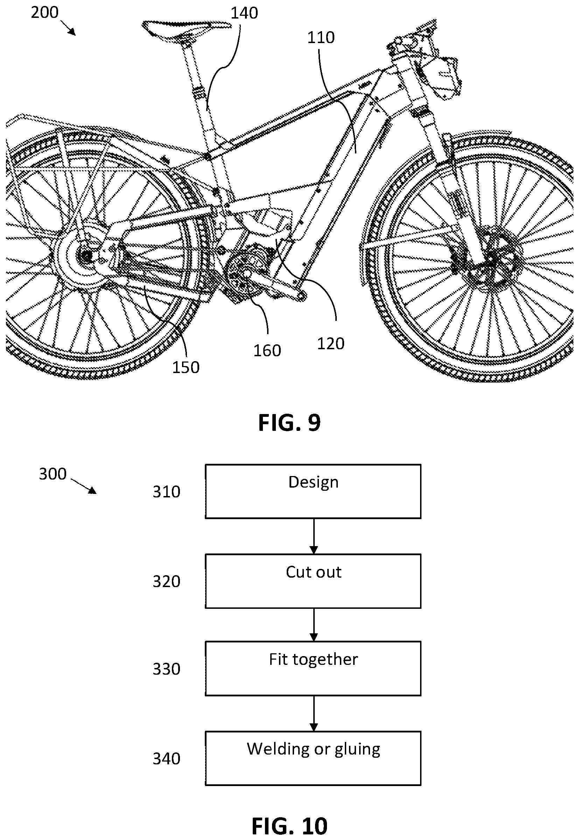

In a second aspect, the current invention is a bicycle 200 that comprises as bicycle frame 100 according to embodiments of the current invention. An example of this can be seen in the photo in FIG. 9. This figure shows a bearing structure 120, the bottom column 110, the seat post 140 and the swingarm 150. The bottom bracket 160 is mounted in the bearing structure 120.

In embodiments of the current invention the bicycle has a battery integrated into one or more components of the bicycle frame. In addition, the bicycle may have a motor and a controller for adjusting the power of the bike. The batteries may be integrated into the bottom column 120.

In a third aspect, the current invention involves a method 300 for creating a bicycle frame consisting of components made of metal plates. An example of such a method is illustrated in the flow diagram in FIG. 10. The method 300 has the following steps:
- cutting out 320 of metal plates from a base plate and folding the cut-out metal plates, whereby the cut-out plates can be made into a bottom column and a structure for the bottom bracket, whereby the structure for the bottom bracket is designed to be a bearing structure for the bottom column and a seat post.
- fitting 330 the cut metal plates to form the bottom column and bearing structure,
- welding 340 or gluing the metal plates together.

In embodiments of the current invention, where there is an advantage to the production process to position the components against each other, when cutting and folding the metal plates, crenelated connections are added to the metal plates. When fitting the components together, they may be positioned opposite each other using crenelated connections.

In embodiments of the current invention, the method comprises the design 310 of the various components using finite element analyses, whereby the finite element analysis calculates the expected maximum load and the expected load on the bicycle frame. By using metal plates, the weld connections can be moved with regard to the places in a classic bicycle frame. Using the finite element method, one can verify that at the location of the maximum expected load, no weld connection is present.

It is an advantage of embodiments of the current invention that small series of bicycle frames (for example e-bike frames) can be built in the most cost-effective manner in non-bicycle frame-specialized companies, without needing extensive heat treatment installations.

In embodiments of the current invention cutting out 320 of the parts of the components is done using a laser.

In embodiments of the current invention, the bottom column and the structure for the bottom bracket are shaped so that when the bottom bracket and head tube are attached, the central axes of these are perpendicular to each other.

## Claims

1. - A bicycle frame (100) with a base that includes as components, a bottom column (110) with head tube (130), a seat post (140) and a structure (120) adapted to install a bottom bracket or a gearbox, whereby the structure (120) is a bearing structure (120) for the bottom column (110) and the seat post (140) so that the bottom column (110) and the seat post (140) form a whole,
wherein the bottom column (110) and the bearing structure (120) are made of metal plates, whereby at least some of the plates are folded, and whereby at least some of the plates overlap and are connected to each other, **characterized in that** the plates of the bearing structure (120) form a closed tube section which extends from the bottom column (110) to the seat post (140) wherein torsional stiffness is obtained by the closed tube section of the bearing structure.

2. - A bicycle frame (100) according to claim 1, whereby the closed tube section has a rectangular cross-section.

3. - A bicycle frame (100) according to one of the prior conclusions, whereby the bicycle frame (110) has a connection (115) that connects the head tube (130) with the bottom column (110) and whereby the connection (115) is a closed tube formed by metal plates.

4. - A bicycle frame according to any of the previous claims, whereby a plate (120b) of the plates of the bearing structure (120) serves as a cross-plate of the bottom column (110).

5. - A bicycle frame according to any of the previous claims, whereby a plate (120c) of the plates of the bearing structure serves as an end plate of the bottom column (110).

6. - A bicycle frame (100) according to one of the prior claims, whereby the bicycle frame has a swingarm (150) and additionally comprises metal plates for the swingarm, whereby the swingarm(150) is made of the metal plates for the swingarm overlapping each other and connected to each other, and whereby the swingarm is attached to the bearing structure (120).

7. - A bicycle frame (100) according to one of the prior claims, whereby the components are lined up using crenelated connections.

8. - A bicycle frame (100) according to one of the prior claims, whereby all the metal plates are made of an aluminum alloy.

9. - A bicycle frame (100) according to claim 14, whereby the aluminum alloy contains zinc.

10. - A bicycle frame (100) according to one of the prior claims, whereby at least one of the components consists of folded metal plates, or consists of a single folded metal plate and is shaped so that one or more batteries can be installed inside.

11. - A bicycle frame (100) according to one of the prior claims whereby the bottom column contains a U-shaped metal plate.

12. - A bicycle (200) comprising a bicycle frame (100) according to one of the previous claims.

13. - The bicycle (200) according to claim 12, the bicycle contains batteries integrated into one or more components of the bicycle frame, a motor and a controller for adjusting the power of the bicycle.

14. - A method (300) for constructing a bicycle frame (100) according to claim 1, consisting of components made of metal plates, the method (300) includes:
- cutting out (320) metal plates from a base plate and folding the cut metal plates, whereby the cut metal plates allow for creating a bearing structure (120) of the bicycle frame (100) and a bottom column (110),
- fitting (330) the cut metal plates to form the bottom column and the bearing structure such that the plates of the bearing structure form a closed tube section,
- welding (340) or gluing the metal plates together such that the closed tube section extends from the bottom column (110) to a seat post (140) wherein torsional stiffness is obtained by the closed tube section of the bearing structure.

15. - A method (300) according to claim 14, whereby the cutting out (320) and folding of the components involves adding crenelated connections to the components, and whereby fitting the components together involves positioning using the crenelated connections.

## Patentansprüche

1. Ein Fahrradrahmen (100) mit einem Unterbau, der als Komponenten eine untere Säule (110) mit Steuerrohr (130), eine Sattelstütze (140) und eine zum Installieren einer Kurbelwelle geeignete Struktur (120) beinhaltet,
- wobei die Struktur (120) eine Lagerstruktur (120) für die untere Säule (110) und die Sattelstütze (140) ist, sodass die untere Säule (110) und die Sattelstütze (140) eine Einheit bilden,
- wobei die untere Säule (110) und die Lagerstruktur (120) aus Metallplatten gefertigt sind, wobei mindestens einige der Platten gefalzt sind und wobei sich mindestens einige der Platten überlappen und miteinander verbunden sind, **dadurch gekennzeichnet, dass** die Platten der Lagerstruktur (120) einen geschlossenen Rohrabschnitt bilden, der sich von der unteren Säule (110) bis zur Sattelstütze (140) erstreckt, wobei die Verwindungssteifigkeit durch den geschlossenen Rohrabschnitt der Lagerstruktur erhalten wird.

2. Ein Fahrradrahmen (100) nach Anspruch 1, wobei der geschlossene Rohrabschnitt einen rechteckigen Querschnitt aufweist.

3. Ein Fahrradrahmen (100) nach einem der vorstehenden Schlussfolgerungen, wobei der Fahrradrahmen (100) eine Verbindung (115) aufweist, die das Steuerrohr (130) mit der unteren Säule (110) verbindet, und wobei die Verbindung (115) ein geschlossenes Rohr ist, das aus Metallplatten gebildet wird.

4. Ein Fahrradrahmen nach einem der vorstehenden Ansprüche, wobei eine Platte (120b) der Platten der Lagerstruktur (120) als Querplatte der unteren Säule (110) dient.

5. Ein Fahrradrahmen nach einem der vorstehenden Ansprüche, wobei eine Platte (120c) der Platten der Lagerstruktur als Endplatte der unteren Säule (110) dient.

6. Ein Fahrradrahmen (100) nach einem der vorstehenden Ansprüche, wobei der Fahrradrahmen eine Schwinge (150) aufweist und zusätzlich Metallplatten für die Schwinge umfasst, wobei die Schwinge (150) aus einander überlappenden und miteinander verbundenen Metallplatten für die Schwinge gefertigt ist, und wobei die Schwinge an der Lagerstruktur (120) befestigt ist.

7. Ein Fahrradrahmen (100) nach einem der vorstehenden Ansprüche, wobei die Komponenten unter Verwendung gezackter Verbindungen aufgereiht werden.

8. Ein Fahrradrahmen (100) nach einem der vorstehenden Ansprüche, wobei alle Metallplatten aus einer Aluminiumlegierung gefertigt sind.

9. Ein Fahrradrahmen (100) nach Anspruch 14, wobei die Aluminiumlegierung Zink enthält.

10. Ein Fahrradrahmen (100) nach einem der vorstehenden Ansprüche, wobei mindestens eine der Komponenten aus gefalzten Metallplatten besteht oder aus einer einzigen gefalzten Metallplatte besteht und geformt ist, sodass eine oder mehrere Batterien im Inneren installiert werden können.

11. Ein Fahrradrahmen (100) nach einem der vorstehenden Ansprüche, wobei die untere Säule eine U-förmige Metallplatte enthält.

12. Ein Fahrrad (200), das einen Fahrradrahmen (100) nach einem der vorstehenden Ansprüche umfasst.

13. Das Fahrrad (200) nach Anspruch 12 wobei das Fahrrad Batterien enthält, die in eine oder mehrere Komponenten des Fahrradrahmens integriert sind, einen Motor und eine Steuereinheit zum Anpassen der Leistung des Fahrrads.

14. Ein Verfahren (300) zur Herstellung eines Fahrradrahmens (100) nach Anspruch 1, wobei das Verfahren (300) beinhaltet:
- Ausschneiden (320) von Metallplatten aus einer Grundplatte und Falzen der ausgeschnittenen Metallplatten, wobei die ausgeschnittenen Metallplatten die Schaffung einer Lagerstruktur (120) des Fahrradrahmens (100) und einer unteren Säule (110) erlauben.
- Anpassen (330) der ausgeschnittenen Metallplatten, um die untere Säule und die Lagerstruktur zu bilden, sodass die Platten der Lagerstruktur einen geschlossenen Rohrabschnitt bilden,
- Zusammenschweißen (340) oder Zusammenkleben der Metallplatten, sodass sich der geschlossene Rohrabschnitt von der unteren Säule (110) bis zu einer Sattelstütze (140) erstreckt, wobei die Verwindungssteifigkeit durch den geschlossenen Rohrabschnitt der Lagerstruktur erhalten wird.

15. Ein Verfahren (300) nach Anspruch 14, wobei das Ausschneiden (320) und Falzen der Komponenten Hinzufügen von gezackten Verbindungen an den Komponenten beinhaltet und wobei Anpassen der Komponenten zusammen Positionieren unter Verwendung der gezackten Verbindungen beinhaltet.

## Revendications

1. Cadre de bicyclette (100) comportant une base qui inclut comme composants une colonne inférieure (110) avec un tube de direction (130), une tige de selle (140) et une structure (120) adaptée pour installer un boîtier de pédalier ou une boîte de vitesses, la structure (120) étant une structure porteuse (120) pour la colonne inférieure (110) et la tige de selle (140) de sorte que la colonne inférieure (110) et la tige de selle (140) forment un tout, dans lequel la colonne inférieure (110) et la structure porteuse (120) sont réalisées en plaques métalliques, au moins certaines des plaques étant pliées, et au moins certaines des plaques se chevauchant et étant reliées les unes aux autres, **caractérisé en ce que** les plaques de la structure porteuse (120) forment une section tubulaire fermée qui s'étend de la colonne inférieure (110) jusqu'à la tige de selle (140), dans lequel une rigidité en torsion est obtenue par la section tubulaire fermée de la structure porteuse.

2. Cadre de bicyclette (100) selon la revendication 1, dans lequel la section tubulaire fermée présente une section transversale rectangulaire.

3. Cadre de bicyclette (100) selon l'une des revendications précédentes, dans lequel le cadre de bicyclette (110) présente une liaison (115) qui relie le tube de direction (130) à la colonne inférieure (110) et dans lequel la liaison (115) est un tube fermé formé par des plaques métalliques.

4. Cadre de bicyclette selon l'une quelconque des revendications précédentes, dans lequel une plaque (120b) des plaques de la structure porteuse (120) sert de plaque transversale de la colonne inférieure (110).

5. Cadre de bicyclette selon l'une quelconque des revendications précédentes, dans lequel une plaque (120c) des plaques de la structure porteuse sert de plaque d'extrémité de la colonne inférieure (110).

6. Cadre de bicyclette (100) selon l'une des revendications précédentes, dans lequel le cadre de bicyclette présente un bras oscillant (150) et comprend en outre des plaques métalliques pour le bras oscillant, dans lequel le bras oscillant (150) est constitué des plaques métalliques pour le bras oscillant se chevauchant les unes les autres et reliées les unes aux autres, et dans lequel le bras oscillant est fixé à la structure porteuse (120).

7. Cadre de bicyclette (100) selon l'une des revendications précédentes, dans lequel les composants sont alignés au moyen de liaisons crénelées.

8. Cadre de bicyclette (100) selon l'une des revendications précédentes, dans lequel toutes les plaques métalliques sont réalisées en un alliage d'aluminium.

9. Cadre de bicyclette (100) selon la revendication 14, dans lequel l'alliage d'aluminium contient du zinc.

10. Cadre de bicyclette (100) selon l'une des revendications précédentes, dans lequel au moins l'un des composants est constitué de plaques métalliques pliées, ou est constitué d'une seule plaque métallique pliée et est conformé de sorte qu'une ou plusieurs batteries puissent être installées à l'intérieur.

11. Cadre de bicyclette (100) selon l'une des revendications précédentes, dans lequel la colonne inférieure contient une plaque métallique en forme de U.

12. Bicyclette (200) comprenant un cadre de bicyclette (100) selon l'une des revendications précédentes.

13. Bicyclette (200) selon la revendication 12, la bicyclette contenant des batteries intégrées dans un ou plusieurs composants du cadre de bicyclette, un moteur et un dispositif de commande pour régler la puissance de la bicyclette.

14. Procédé (300) de construction d'un cadre de bicyclette (100) selon la revendication 1, constitué de composants réalisés en plaques métalliques, le procédé (300) comprenant :
- la découpe (320) de plaques métalliques à partir d'une plaque de base et le pliage des plaques métalliques découpées, les plaques métalliques découpées permettant de créer une structure porteuse (120) du cadre de bicyclette (100) et une colonne inférieure (110),
- l'assemblage (330) des plaques métalliques découpées pour former la colonne inférieure et la structure porteuse de telle sorte que les plaques de la structure porteuse forment une section tubulaire fermée,
- le soudage (340) ou le collage des plaques métalliques les unes aux autres de telle sorte que la section tubulaire fermée s'étende de la colonne inférieure (110) jusqu'à une tige de selle (140), dans lequel une rigidité en torsion est obtenue par la section tubulaire fermée de la structure porteuse.

15. Procédé (300) selon la revendication 14, dans lequel la découpe (320) et le pliage des composants comprennent l'ajout de liaisons crénelées aux composants, et dans lequel l'assemblage des composants comprend un positionnement au moyen des liaisons crénelées.
